Europäisches Patentamt

(19) European Patent Office

Office européen des brevets

(11) Publication number: **0 226 236**
**B1**

# (12) EUROPEAN PATENT SPECIFICATION

(45) Date of publication of the patent specification:
27.12.89

(51) Int. Cl.⁴: **G01N 21/74**

(21) Application number: 86201958.5

(22) Date of filing: 10.11.86

(54) Graphite probe and electrothermal atomiser including such a probe.

(30) Priority: 12.11.85 GB 8527865

(43) Date of publication of application:
24.06.87 Bulletin 87/26

(45) Publication of the grant of the patent:
27.12.89 Bulletin 89/52

(84) Designated Contracting States:
CH DE FR GB IT LI SE

(56) References cited:
EP-A- 0 165 643
EP-A- 0 168 113
GB-A- 2 136 144
US-A- 3 862 805
US-A- 4 548 497

(73) Proprietor: PHILIPS ELECTRONIC AND ASSOCIATED
INDUSTRIES LIMITED, Philips House 188 Tottenham
Court Road, London W1P 9LE(GB)

(84) Designated Contracting States: GB

(73) Proprietor: N.V. Philips' Gloeilampenfabrieken,
Groenewoudseweg 1, NL-5621 BA Eindhoven(NL)

(84) Designated Contracting States: CH DE FR IT LI SE

(72) Inventor: Brown, Alistair Alexander, c/o Pye Unicam
Limited York Street, Cambridge CB1 2PX(GB)

(74) Representative: Andrews, Arthur Stanley et al, PHILIPS
ELECTRONICS Patents and Trade Marks Department
Centre Point New Oxford Street, London WC1A 1QJ(GB)

## Description

The invention relates to a graphite probe for an electrothermal atomiser, the probe comprising a stem portion and a head portion.

The invention further relates to an electrothermal atomiser for a spectrophotometer, said atomiser comprising a hollow body of electrically conductive material, means for inserting a probe into the interior of the hollow body, and means for passing an electrical current through the body to heat the interior of the hollow body to a temperature which is sufficient to atomise a sample deposited on the probe wherein the probe comprises a stem portion and a head portion for receiving the sample.

Such a probe and atomiser have been disclosed in UK Patent Application No. 2136144A. In this atomiser the probe was formed of pyrolytic graphite as was the preferred form of hollow body (or cuvette). An atomiser as set forth in the second paragraph has also been disclosed in UK Patent Application No. 2088582A in which the probe (or sample carrier) is formed of graphite of unspecified type. UK Patent Application No. 2071845 discloses such an atomiser in which the probe is in the form of a wire (tungsten) filament. UK Patent Application No. 2113128A discloses a probe made from glassy carbon.

It has been found that probes made from pyrolytic graphite and glassy carbon and probes coated with pyrolytic graphite suffer from the disadvantage of sample spreading when samples contain more than about 0.5% v/v of nitric acid. The reduced surface tension of such solutions causes the sample to spread irreproducibly up the probe stem during the drying phase. Various proposals have been made in an attempt to overcome this problem. Initial experiments were conducted with the probe inserted into the cuvette through a slot in the wall in a manner as described in UK Patent Application No. 2136144A. With this configuration only the probe head is heated significantly during the drying phase, while the stem, outside the cuvette, remains cool. It was thought that the sharp temperature gradient along the probe could be responsible for the spreading phenomenon, as the liquid sample would tend to travel to the cooler region outside the cuvette.

An alternative configuration, the 'end entry' probe, allows the probe to enter the cuvette parallel to its long axis. It is, therefore, no longer necessary to cut a slot in the cuvette, and so improved cuvette lifetimes and sensitivity would be expected. The temperature gradient along the probe would now also be much less steep, as a large part of the stem as well as the head would be heated. It was thought that the spreading problem would therefore be alleviated, and that even if some spreading did occur, as much more of the probe stem would be introduced into the hot zone during the atomisation phase, the effects might be less significant.

Such an arrangement was tried and initial results using glassy carbon probes with a pyrolytic graphite coating were promising. However on repeating the measurement it was found that the performance deteriorated until there was no significant improvement in controlling sample spreading over the front entry system.

Other approaches tried were to use microporous glassy carbon probes with either the head or the stem pyrolytically coated. It was found that coating the head and leaving the stem uncoated gave no significant advantage over a fully coated probe while coating the stem and leaving the head uncoated gave a worse performance.

A further approach attempted was to deposit the sample onto a hot probe. However, with the arrangement used in which the probe is heated by the cuvette it was not found to be practicable as the sample boiled inside the pipette before it could be deposited on the probe. It is considered, however, that this arrangement could be advantageous if the probe is heated independently of the cuvette.

A further alternative which has been tried experimentally is to provide a probe in which the stem is thicker than the head, a step being formed where the head and stem meet. The purpose of the step is to prevent the liquid spreading up the stem. This was found to have certain disadvantages. If the step was located outside the cuvette then sample spread as far as the step and a proportion of the sample was then atomised outside the cuvette causing a reduction in sensitivity. Alternatively, if the step was located within the cuvette a double peak was obtained. This is thought to be caused by the different masses of the head and stem which results in the head reaching the atomising temperature before the stem. Consequently the sample which has spread to the step is atomised later than that on the portion of the head remote from the step.

All these attempts at solving the problem of sample spreading have proved unsuccessful and appear to make the use of probe atomisation unsatisfactory for all but a minority of practical samples.

It is an object of the invention to enable the provision of an electrothermal atomiser in which the sample is atomised off a probe inserted into a hollow body which is capable of handling acid samples.

The invention provides graphite probe for an electrothermal atomiser as set forth in the opening paragraph characterised in that the head portion is provided with a ridge which is dimensioned and positioned to have a heating rate similar to that of the rest of the probe head and to provide a barrier impeding the spread of liquid samples from the head to the stem when the probe head is heated within an atomiser.

By forming a ridge which is of comparatively low mass similar to that of the rest of the head portion the problems of double peaks and of sample spreading can both be reduced. If the ridge is perfectly thermally matched to the rest of the probe head then no double peaks will be produced since the ridge temperature profile will exactly match that of the rest of the head and all the sample will be atomised simultaneously. The temperature of the head portion of the probe is raised to the atomising temperature principally by the radiation from the wall of the hollow body or cuvette.

The stem thickness may be greater than the head thickness. This enables a more robust construction of probe.

The stem thickness may be greater than the head plus ridge thickness. This has the advantage that when a front entry atomiser is used the increased thickness stem can be used to close the slot in the tube wall.

The invention further provides an electrothermal atomiser as set forth in the second paragraph characterised in that the head portion is provided with a ridge which is dimensioned to have a heating rate similar to that of the rest of the probe head and to provide a barrier impeding the spread of liquid samples from the head to the stem when the probe is heated within the hollow body and that the probe insertion means is arranged to insert the probe so that the ridge is located within the hollow body.

Such an atomiser enables the advantages of probe atomisation to be obtained while reducing the problems associated with probe atomisation of samples in liquids having a low surface tension, i.e. sample spreading or the production of double peaks.

Embodiments of the invention will now be described, by way of example, with reference to the accompanying drawings, in which:-

Figure 1 shows a plan view of a graphite probe according to the invention,

Figure 2 is a side elevation of the graphite probe shown in Figure 1,

Figure 3 is a cross-sectional view on line X-X of Figure 4 of the graphite probe of Figure 2 inserted in a tubular graphite cuvette,

Figure 4 is a cross-sectional view on line Y-Y of Figure 3 of the graphite probe of Figure 1 inserted in a tubular graphite cuvette,

Figure 5 is a side elevation of an electrothermal atomiser according to the invention,

Figure 6 is a front elevation of the electrothermal atomiser shown in Figure 5, and

Figure 7 is a cross-sectional view on line Z-Z of Figure 6.

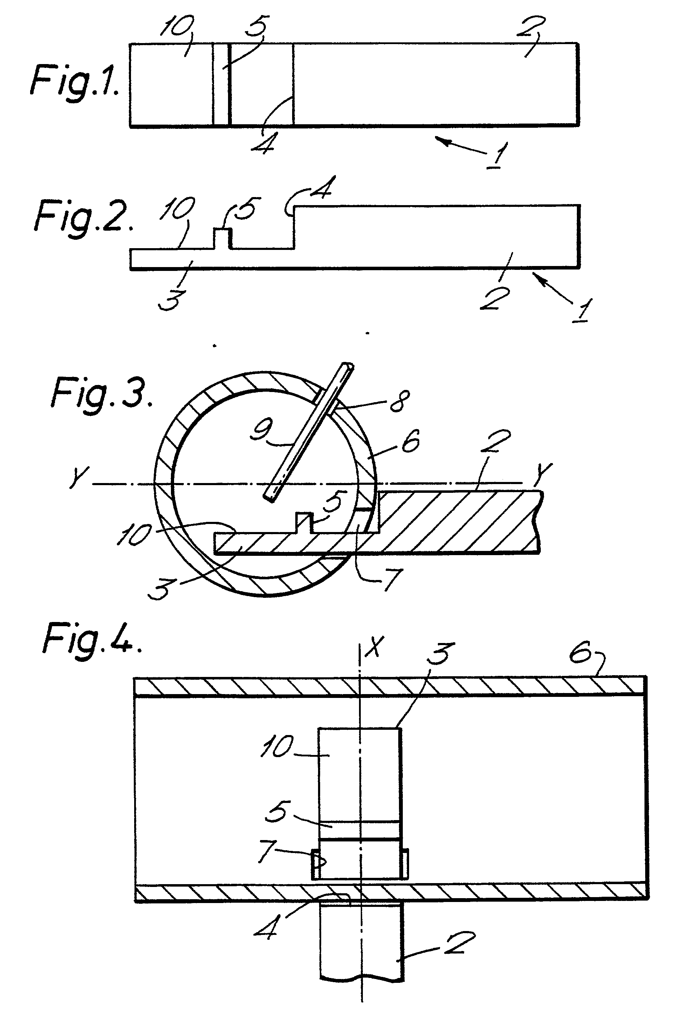

Figures 1 and 2 show plan and side elevations of a probe 1 having a stem portion 2 and a head portion 3. The stem portion 2 is thicker than the head portion 3 and the stem and head portions meet in a step 4. The head portion 3 is provided with a ridge 5 extending upwardly from its surface when in use. The ridge 5 extends across the full width of the head portion in the embodiment shown but is merely required to extend over such a width as is necessary to effectively prevent the sample from spreading further along the head portion towards the step 4. The size and shape of the ridge 5 are chosen so that the ridge forms an effective barrier to the spread of liquid sample but retains a low mass so that it heats at the same rate as the rest of the probe head when the probe is inserted into the hollow body.

Figures 3 and 4 show the probe head 3 inserted in a cuvette 6 which is a tubular graphite body provided with a slot 7 through which the probe is inserted and an aperture 8 through which a sample may be deposited on the probe head 3 either manually with a micro pipette or automatically with an autosampler through a tube 9. The tube 9 is inserted through the aperture 8 only for deposition of the sample and is withdrawn by the autosampler mechanism when sample deposition has been achieved. The sample is deposited on the part 10 of the head 3 on the opposite side of the ridge 5 from the step 4. The probe 1 is dimensioned and positioned so that the step 4 is close to the slot 7 when the probe is inserted into the cuvette to minimise the escape of atomised sample through the slot 7 and thus maximise the measurement sensitivity.

An experimental probe designed for use with a Pye Unicam GF8 Electrothermal atomiser had a stem thickness of 1.5mm, a head thickness of 0.3mm and a ridge height of 0.7mm. The head length was 8mm and the ridge was spaced 4mm from the free end of the head and was 0.5mm thick.

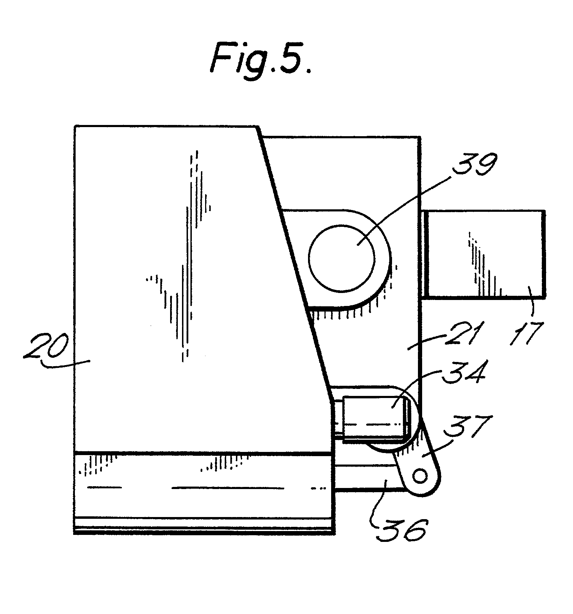

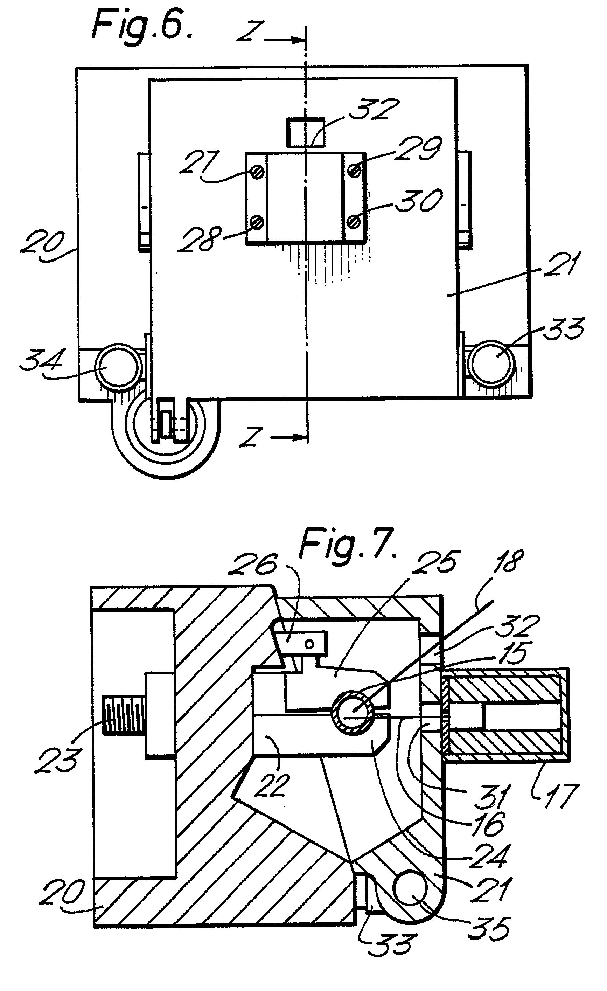

Figures 5,6 and 7 show a cuvette 15, a probe 16, and an actuator 17 mounted in and on an atomiser for an atomic absorption spectrophotometer. The probe 16 takes the form of a probe as described with reference to Figures 1 and 2 and the cuvette 15 is a hollow cylindrical graphite body. The atomiser comprises a body 20 having a hinged door 21. Within the atomiser body 20 two contact jaws, one of which is shown at 22 grip each end of the cuvette 15. The jaws have electrical connection terminals, one of which is shown at 23, to which, in operation, an electrical current source is connected for passing a current through the cuvette 15 to raise its temperature to the atomisation temperature. The contact jaw 22 comprises a fixed lower portion 24 and a pivotted upper portion 25 which can be pivotted by moving a member 26 into the body 20, horizontally to the left in the embodiment shown in Figure 7. The actuator 17, which in this embodiment is in the form of a solenoid but which may be, for example a motor and cam drive, is attached to the door 21 of the furnace by four screws 27 to 30 and the probe 16 passes through an aperture 31 in the door 21. A further aperture 32 is provided in the front of the door 21 through which a dosing tube 18 may be inserted to deposit a sample on the probe. Preferably the aperture 32 is closed when the cuvette is being heated so that the escape of protective gas is reduced. Since the cuvette 15 is normally made of carbon it is necessary to prevent rapid oxidation when it is heated to the atomising temperatures which may be in the region of 3000 degrees Celsius. Consequently it is customary to provide a flow of inert gas over and through the cuvette 15.

The door 21 is hinged along its bottom edge, being mounted between two fixed members 33 and 34 by a shaft 35 the ends of which are free to rotate in the fixed members 33 and 34. The opening and closing of the door 21 is performed by a rod 36 pivotally connected to a lug 37 on the door 21 and operated by a piston in a cylinder. Quartz windows, one of which 39 is shown are set into each side of the door 21, the quartz windows being aligned with the longitudinal axis of the tubular body 15. The door 21 is normally kept closed and only opened to replace the cuvette when it has reached the end of its life.

While the arrangement described shows an atomiser as disclosed in UK Patent Application No. 2136144A the invention is not limited to such an arrangement. A probe of the form shown in Figures 1 and 2 can advantageously be applied to any atomiser in which the sample is atomised off a probe. The particular shape of the head portion of the probe may also be adapted to suit the size of sample to be deposited, for example the head portion may be wider than the stem portion producing a probe which is T-shaped in plan. The probe material may be electrographite for ease of machining and may be subsequently coated with pyrolytic graphite to reduce the porosity. Alternatively a totally pyrolytic graphite or glassy carbon probes could be used but these tend to be more difficult to machine to obtain the required head profile.

## Claims

1. A graphite probe for an electrothermal atomiser, the probe comprising a stem portion and a head portion characterised in that the head portion is provided with a ridge which is dimensioned and positioned to have a heating rate similar to that of the rest of the probe head and to provide a barrier impeding the spread of liquid samples from the head to the stem when the probe head is heated within an atomiser.

2. A graphite probe as claimed in Claim 1, in which the stem thickness is greater than the head thickness.

3. A graphite probe as claimed in Claim 2, in which the stem thickness is greater than the head plus ridge thickness.

4. An electrothermal atomiser for a spectrophotometer, said atomiser comprising a hollow body of electrically conductive material, means for inserting a probe into the interior of the hollow body, and means for passing an electrical current through the body to heat the interior of the hollow body to a temperature which is sufficient to atomise a sample deposited on the probe wherein the probe comprises a stem portion and a head portion for receiving the sample, characterised in that the head portion is provided with a ridge which is dimensioned and positioned to have a heating rate similar to that of the rest of the probe head and to provide a barrier impeding the spread of liquid samples from the head to the stem when the probe is heated within the hollow body and that the probe insertion means is arranged to insert the probe so that the ridge is located within the hollow body.

5. An electrothermal atomiser as claimed in Claim 4, in which the hollow body comprises an elongate graphite tube.

6. An electrothermal atomiser as claimed in Claim 5, in which the tube is provided with a slot in its wall, and the atomiser further comprises means for inserting the probe into the tube through the slot.

7. An electrothermal atomiser as claimed in Claim 6, in which the stem portion of the probe is thicker than the height of the slot, a step is formed between the head portion and the stem portion, and the means for inserting the probe is arranged to cause the step to be located adjacent to, but not touching, the exterior of the tube to substantially close the aperture formed by the slot.

## Revendications

1. Sonde de graphite pour un atomiseur électrothermique comportant une partie de tige et une partie de tête, caractérisée en ce que la partie de tête est munie d'une nervure qui est dimensionnée et positionnée de façon à présenter une vitesse de chauffage analogue à celle du reste de la tête vers la tige lorsque la tête de sonde est chauffée dans un atomiseur.

2. Sonde de graphite selon la revendication 1, dans laquelle l'épaisseur de la tige est supérieure à l'épaisseur de la tête.

3. Sonde de graphite selon la revendication 2, dans laquelle l'épaisseur de la tige est supérieure à l'épaisseur de la tête plus l'épaisseur de la nervure.

4. Atomiseur électrothermique pour un spectrophotomètre, comportant un corps creux en matériau électriquement conducteur, un moyen pour l'insertion d'une sonde dans l'intérieur du corps creux, et un moyen assurant le passage d'un courant électrique à travers le corps pour chauffer l'interieur du corps creux à une température qui suffit pour atomiser un échantillon déposé sur la sonde, dans lequel la sonde comporte une partie de tige et une partie de tête pour la réception de l'échantillon, caractérisé en ce que la partie de tête est munie d'une nervure qui est dimensionée et positionnée de façon à présenter une vitesse de chauffage analogue à celle du reste de la tête de sonde et à fournir une barrière empêchant la dispersion d'échantillons de liquide à partir de la tête vers la tige lorsque la sonde est chauffée dans le corps creux et en ce que le moyen d'insertion est conçu pour insérer la sonde de façon que la nervure se situe dans le corps creux.

5. Atomiseur électrothermique selon la revendication 4, dans lequel le corps creux comporte un tube de graphite allongé.

6. Atomiseur électrothermique selon la revendication 5, dans lequel le tube est muni d'une ménagée dans sa paroi et l'atomiseur comporte en outre un moyen pour l'insertion de la sonde dans le tube à travers la fente.

7. Atomiseur électrothermique selon la revendication 6, dans lequel la partie de tige de la sonde est plus épaisse que la hauteur de la fente, une transition est formée entre la partie de tête et la partie de tige et le moyen pour l'insertion de la sonde est conçu pour amener la transition près de, mais non en contact avec l'extérieur du tube pour fermer pratiquement l'ouverture formée par la fente.

## Patentansprüche

1. Graphitsonde für einen elektrothermischen Zerstäuber, wobei die Sonde einen Fussteil und einen Kopfteil aufweist, dadurch gekennzeichnet, dass der Kopfteil mit einem Rücken versehen ist, der derart bemessen und an einer solchen Stelle vorgesehen ist, dass er eine Erhitzungsgeschwindigkeit aufweist, die der des restlichen Teils des Sondenkopfes entspricht, und dass er eine Sperre bildet, die das Verbreiten flüssiger Proben von dem Kopf zu dem Fuss verhindert, wenn der Sondenkopf innerhalb des Zerstäubers erhitzt wird.

2. Graphitsonde nach Anspruch 1, bei der die Dicke des Fusses grösser ist als die des Kopfes.

3. Graphitsonde nach Anspruch 2, bei der die Dicke des Fusses grösser ist als die Gesamtdicke des Kopfes und des Rückens.

4. Elektrothermischer Zerstäuber für ein Spektralphotometer, wobei dieser Zerstäuber einen Hohlkörper aus elektrisch leitendem Werkstoff aufweist, Mittel zum Einführen einer Sonde in das Innere des Hohlkörpers und Mittel zum Hindurchleiten eines elektrischen Stromes durch den Körper zum Erhitzen des Innneren des Hohlkörpers auf eine Temperatur, die ausreicht um eine Probe auf der Sonde zu zerstäuben, wobei die Sonde einen Fussteil und einen Kopfteil zum Tragen der Probe aufweist, dadurch gekennzeichnet, dass der Kopfteil mit einem Rücken versehen ist, der derart bemessen und an einer solchen Stelle vorgesehen ist, dass er eine Erhitzungsgeschwindigkeit aufweist, die der des restlichen Teils des Sondenkopfs entspricht, und dass er eine Sperre bildet, die das Verbreiten flüssiger Proben von dem Kopf zu dem Fuss verhindert, wenn die Sonde innerhalb des Hohlkörpers erhitzt wird und dass Sondeneinführungsmittel vorgesehen sind zum Hineinführen der Sonde, so dass der Rücken innerhalb des Hohlkörpers liegt.

5. Elektrothermischer Zerstäuber nach Anspruch 4, bei dem der Hohlkörper eine längliche Graphitröhre aufweist.

6. Elektrothermischer Zerstäuber nach Anspruch 5, bei dem die Röhre mit einem Schlitz in der Wand versehen ist und der Zerstäuber weiterhin Mittel aufweist zum durch den Schlitz hindurch Hineinführen der Sonde in die Röhre.

7. Elektrothermischer Zerstäuber nach Anspruch 6, bei dem der Fussteil der Sonde dicker ist als die Höhe des Schlitzes, wobei zwischen dem Kopfteil und dem Fussteil eine Stufe gebildet ist und die Mittel zum Hineinführen der Sonde derart vorgesehen sind, dass die Stufe in der Nähe der Röhre liegt, diese aber nicht berührt, so dass die durch den Schlitz gebildete Öffnung nahezu abgesperrt wird.

Fig.1.

Fig.2.

Fig.3.

Fig.4.

# Fig.5.

Fig.6.

Z

*32*

*27*          *29*

*30*

*28*

*20*

*21*

*34*          *33*

Z

Fig.7.

*26*     *25*     *18*

*32*

*15*

*23*

*22*

*31*

*16*

*24*

*20*          *21*

*33*     *35*

*17*